# EUROPEAN PATENT SPECIFICATION

(11) **EP 2 004 710 B1**
(45) Date of publication and mention of the grant of the patent: **20.10.2010**
(21) Application number: 07727457.9
(22) Date of filing: 28.03.2007
(51) Int. Cl.: C08F 10/00, C08F 10/02

(54) **METHOD FOR MAKING A TRANSITION BETWEEN POLYMER GRADES**
VERFAHREN ZUM ERREICHEN EINES ÜBERGANGS ZWISCHEN POLYMERQUALITÄTEN
PROCÉDÉ PERMETTANT DE CRÉER UNE TRANSITION ENTRE DES QUALITÉS DE POLYMÈRES

(30) Priority: 30.03.2006 EP 06112036
(43) Date of publication of application: 24.12.2008
(73) Proprietor: TOTAL PETROCHEMICALS RESEARCH FELUY, 7181 Seneffe (Feluy) (BE)
(72) Inventor: MOERS, Marc, B-2060 Antwerpen (BE); VAN LOOVEREN, Lieven, B-3891 Mielen-boven-Aalst (Gingelom) (BE); WIJFFELS, Mathias, B-2000 Antwerpen (BE)
(74) Representative: Leyder, Francis
(86) International application number: PCT/EP2007/052985
(87) International publication number: WO 2007/113191

(56) References cited:
- EP-A- 0 580 930
- EP-A- 0 905 151
- EP-A- 0 905 153
- EP-A- 1 544 218
- WO-A-01/66610
- WO-A-2004/029108
- WO-A-2004/050722
- US-A- 6 063 878

## Description

### FIELD OF THE INVENTION

The present invention relates to a method of transition between polymer grades in a polymerisation process comprising polymerising at least one monomer in at least a first reactor and a second reactor connected to each other in series.

### BACKGROUND OF THE INVENTION

A polymer grade is a polymer that falls within a given set of specifications, which define specific properties that the polymer must have, for example for polyethylene a melt flow index and a density falling within given ranges. In polymerisation processes that produce polymers in a continuous process, the change from one grade of polymer to another grade of the same polymer or the change from a homopolymer to a copolymer or vice versa is made by changing the reaction conditions while at the same time producing polymer. This change is called a transition and it is in this description considered to start at a time 0 (t=0), which is when the reaction conditions are first changed with the intention of targeting a second polymer grade. At t=0, the reaction is still producing the first grade of polymer product, that is, the reactor is producing a polymer that is within the specifications set for that first grade. After t=0, the reaction conditions are gradually changed and thus if the second grade is highly different from the first grade, polymer that is off-specification, i.e. not within the specifications of either the first or the second grade, is produced.

The transition is considered finished when the reactor produces the second grade, i.e. a polymer that is within the specifications set for said second grade. During a transition, the parameters that are typically changed, for example in the case of olefin polymerisations, are selected from temperature, feed of monomer, feed of comonomer, feed of hydrogen, feed of cocatalyst or feed of catalyst. By the "feed" of a substance it is meant herein the flow rate of the substance in kg per hour into a reactor.

In a process comprising two or more reactors in series, monomer is firstly polymerised in a first reactor and then passed into a second reactor wherein the polymerisation continues. The transitions in this kind of process are at the moment made by changing the reaction conditions in both reactors at the same time. The changes made in both reactors at the same time however lead to an important degree of fluctuation of the properties of the polymer products, such as fluctuations in the melt index of the polymer, as well as to an important amount of product that is off-specification.

### OBJECTS AND SUMMARY OF THE INVENTION

It is an object of the present invention to provide a method of making a transition while reducing the time required for it. Another object of the invention is to provide a method for transition wherein the fluctuations in the properties of the polymers formed are minimised. A further object of the present invention is to provide a method for transition that enables a reduction in the amount of polymer that is off-specification.

At least one of the above objects is achieved by the means of the present invention, namely a method of transition between polymer grades in a polymerisation process comprising polymerising at least one monomer in at least a first reactor and a second reactor connected to each other in series, wherein the monomer feed into the first reactor is maintained essentially constant during the transition, changing by at most 5 % during the transition, the percentage change being in relation to the average monomer feed in the first reactor of the transition. The invention is particularly applicable to transitions between polyolefin grades.

### BRIEF DESCRIPTION OF THE DRAWINGS

Figure 1 is an example of the monomer feed in the first reactor according to the prior art. The abscissa represents time in h:min and the ordinate represents the monomer feed in kg/h.
Figure 2 is an example of the monomer feed in the first reactor according to the invention. The abscissa represents time in h:min and the ordinate represents the monomer feed in kg/h.

### DETAILED DESCRIPTION OF THE INVENTION

The invention relates to a method of transition between polymer grades in a polymerisation process comprising polymerising at least one monomer in at least a first reactor and a second reactor connected to each other in series, wherein the monomer feed into the first reactor is maintained essentially constant during the transition, changing by at most 5 % during the transition, the percentage change being in relation to the average monomer feed in the first reactor of the transition.

The present invention thus provides a method for making a transition in such a manner that the fluctuations in the reactors are minimised, the amount of off-specifications is reduced significantly and the time required for the transition is also reduced.

The number of reactors used in the present invention can be two, three, four, five, six or more. The monomer feed in the first reactor is not changed, whereas the other feeds can be changed. The other feeds are based on, for example in the case of olefin polymerisations, the hexane/monomer ratio or the hydrogen/monomer ratio.

According to the present invention, the monomer feed in the first reactor is kept essentially constant during the transition. By essentially constant it is meant that the monomer feed in the first reactor is changed at most by 5 % during the transition. The percentage change is in relation to the average monomer feed during the transition in the first reactor. According to another embodiment, the monomer feed in the first reactor is changed at most by 2 % during the transition. According to a preferred embodiment, the monomer feed in the first reactor is changed at most by 1 % during the transition.

According to an embodiment, the polymerisation process is an olefin polymerisation process carried out using a metallocene catalyst, a chromium-type catalyst and/or a Ziegler-Natta catalyst. Ziegler-Natta catalysts are preferred.

The invention can be used in the polymerisation of any desired monomer. However, according to an embodiment of the invention, the polymer grades are polyolefin grades. In this case, the monomers are olefins, such as ethylene, propylene, 1-butene, 1-hexene, 4-methyl 1-pentene, 1-heptene and 1-octene. Any mixtures of these monomers can also be used. The term polymerisation here refers thus to both homopolymerisation and copolymerisation. Alpha-olefinic comonomers comprising 3 to 10 carbon atoms other than those mentioned above can also be used.

According to another embodiment the polyolefin grades are multimodal polyolefin grades, that is, different resins are formed in different reactors connected to each other in series. By multimodal, it is meant bimodal, trimodal etc. When multimodal polymers are manufactured, the method according to the invention can also be used in such a way that while the monomer feed into the first reactor is kept essentially constant, the amount of polymer formed in the second reactor is increased or decreased, depending on the required change of ratio of the two resins in the final polymer product.

In a particularly preferred embodiment, the invention relates to a method for making a transition in a polymerisation process wherein polyethylene, preferably bimodal polyethylene grades are prepared.

When ethylene and/or propylene are polymerised, the polymerisation process in the present invention is preferably carried out in the liquid phase (slurry process) or in the gas phase.

In the liquid slurry process, the liquid comprises ethylene and/or propylene, and where required one or more alpha-olefinic comonomers comprising from 3 to 10 carbon atoms, in an inert diluent. The comonomer may be selected from 1-butene, 1-hexene, 4-methyl 1-pentene, 1-heptene and 1-octene. The inert diluent is preferably isobutane. Other compounds such as a metal alkyl or hydrogen may be introduced into the polymerisation reaction to regulate activity and polymer properties such as melt flow index. In one preferred process of the present invention, the polymerisation process is carried out in two loop reactors, preferably in two liquid-full loop reactors, also known as a double loop reactor.

The method of the invention is also suitable for olefin gas phase polymerisations. The gas phase polymerisation can be performed in two or more fluid bed or agitated bed reactors. The gas phase comprises ethylene and/or propylene, and if required an alpha-olefinic comonomer comprising 3 to 10 carbon atoms, such as 1-butene, 1-hexene, 4-methyl-1-pentene, 1-octene or mixtures thereof as well as inert gas such as nitrogen. Optionally a metal alkyl can also be injected into the polymerisation medium, as well as other reaction controlling agents such as hydrogen or oxygen. Optionally a hydrocarbon-diluent such as pentane, isopentane, hexane, isohexane, cyclohexane or mixtures thereof can be used.

In the case of transitions of polyethylene grades, during a transition, a parameter that can be changed is, for example, the amount of hexene injected in the first reactor, which can vary between 10 and 120 kg/t of polymer produced. Moreover, the ethylene off-gas (in the first reactor and second reactors) can vary by up to 20 %. The ratio of hydrogen injection to off-gas (mostly in the second reactor) can vary by up to 35 %, the reactor temperature by approximately up to 5 % and the reactor ratio (tons made in second reactor vs. first reactor) by up to 10 %. These values are only given as a general indication and it is clear to a person skilled in the art which values should be used for any given transition.

More stability can be obtained if the monomer off-gas/monomer feed in the first reactor is kept constant, that is, the other injections (for example, hydrogen, comonomer, etc.) are dosed as a ratio to the monomer. Keeping the flow of monomer i.e. the monomer feed constant thus enables changes in injection of the other parameters to be done without major disturbances and fluctuations.

As an example, it can be mentioned that when a transition according to the prior art is made in a polymerisation process having a production rate of approximately 30 t/h, the amount of off-specification that is formed is about 200-500 t and the time required is about 12-20 hours. With the method according to the present invention, these values can be reduced down to 100 t of off-specification and 8 hours in transition time.

### EXAMPLES

The following examples demonstrate the invention in relation to the transition of a Ziegler-Natta polyethylene from a Grade A to a Grade B during a continuous polymerisation process in two liquid-full loop reactors R1 and R2 connected to each other in series (double loop reactor). The first transition was carried out according to the prior art, where the monomer feed in the first reactor R1 was not constant. The second transition was carried out according to the invention. Table 1 shows the specifications set for each grade.

**Table 1**

| | **Grade A** | **Grade B** |
|---|---|---|
| **MI 5 range / g/10min** | 0.40 - 0.55 | 1.87 - 2.53 |
| **Density range / g/cm³** | 0.947 - 0.949 | 0.958 - 0.960 |

The comonomer hexene was added in both transitions at a constant rate of 0.00346 kg/hr into both reactors. The temperature in the first reactor R1 was maintained at a temperature of about 87°C and the temperature in the second reactor R2 was maintained at about 95°C in both transitions. The pressure was maintained at 4.2 MPa in R1 and at about 4 MPa in R2. The transition was taken to start from the moment the hydrogen feed was changed with the intention of obtaining polymer Grade B.

The density was measured according to the method of standard test ASTM 1505 at a temperature of 23 °C. The melt index MI5 was measured according to the method of standard test ASTM D 1238 under a load of 5 kg and at a temperature of 190 °C.

### Prior art example

The transition started at time 0h00, which is the time that the hydrogen feed was first increased with the intention of producing the second polymer Grade B. At this point Grade A was still being produced on-specification. The desired Grade B was obtained 19 hours and 30 minutes later. The feeds and product properties are indicated in Table 2 below.

**Table 2: Prior art transition**

| **Time/** | **Monomer feed in 1^{st} reactor/** | **Monomer feed in 2^{nd} reactor/** | **Hydrogen feed in 1^{st} reactor/** | **Hydrogen feed in 2^{nd} reactor/** | **product density/** | **Product melt flow index/** |
|---|---|---|---|---|---|---|
| **h:min** | **kg/h** | **kg/h** | **kg/h** | **kg/h** | **g/cm³** | **g/10min** |
| 0:00 | 7127 | 7354 | 103 | 13 | 0,9472 | 0,414 |
| 0:15 | 7119 | 7395 | 319 | 13 | 0,9472 | 0,414 |
| 0:30 | 7110 | 7424 | 377 | 13 | 0,9472 | 0,414 |
| 0:45 | 7102 | 7465 | 379 | 13 | 0,9472 | 0,414 |
| 1:00 | 7093 | 7463 | 382 | 13 | 0,9472 | 0,544 |
| 1:15 | 7085 | 7492 | 385 | 13 | 0,9472 | 0,544 |
| 1:30 | 7076 | 7500 | 380 | 13 | 0,9472 | 0,544 |
| 1:45 | 7067 | 7550 | 383 | 13 | 0,9472 | 0,682 |
| 2:00 | 7045 | 7561 | 396 | 13 | 0,9485 | 0,682 |
| 2:15 | 7022 | 7606 | 389 | 13 | 0,9485 | 0,682 |
| 2:30 | 6998 | 7609 | 384 | 13 | 0,9485 | 0,682 |
| 2:45 | 6975 | 7657 | 385 | 13 | 0,9485 | 0,682 |
| 3:00 | 6951 | 7658 | 380 | 15 | 0,9485 | 0,682 |
| 3:15 | 6928 | 7714 | 380 | 16 | 0,9485 | 1,096 |
| 3:30 | 6914 | 7714 | 386 | 16 | 0,9485 | 1,096 |
| 3:45 | 6900 | 7728 | 379 | 16 | 0,9485 | 1,096 |
| 4:00 | 6886 | 7718 | 376 | 16 | 0,9508 | 1,096 |
| 4:15 | 6872 | 7769 | 375 | 16 | 0,9508 | 1,739 |
| 4:30 | 6839 | 7878 | 378 | 15 | 0,9508 | 1,739 |
| 4:45 | 6642 | 7705 | 373 | 14 | 0,9508 | 1,739 |
| 5:00 | 6767 | 7947 | 370 | 14 | 0,9535 | 1,739 |
| 5:15 | 6880 | 7903 | 382 | 14 | 0,9535 | 2,761 |
| 5:30 | 6650 | 7836 | 367 | 13 | 0,9535 | 2,761 |
| 5:45 | 6648 | 7873 | 368 | 12 | 0,9535 | 2,761 |
| 6:00 | 6646 | 7865 | 369 | 12 | 0,9558 | 2,761 |
| 6:15 | 6644 | 7845 | 365 | 12 | 0,9558 | 2,761 |
| 6:30 | 6750 | 7878 | 366 | 11 | 0,9558 | 3,620 |
| 6:45 | 6773 | 7850 | 372 | 11 | 0,9558 | 3,620 |
| 7:00 | 6699 | 7877 | 369 | 11 | 0,9545 | 3,620 |
| 7:15 | 6685 | 7859 | 368 | 12 | 0,9545 | 4,003 |
| 7:30 | 6645 | 7868 | 367 | 12 | 0,9545 | 4,003 |
| 7:45 | 6652 | 7836 | 365 | 13 | 0,9545 | 4,003 |
| 8:00 | 6769 | 7860 | 370 | 13 | 0,9566 | 4,003 |
| 8:15 | 6778 | 7861 | 371 | 14 | 0,9566 | 3,765 |
| 8:30 | 6761 | 7886 | 369 | 14 | 0,9566 | 3,765 |
| 8:45 | 6744 | 7866 | 368 | 15 | 0,9566 | 3,765 |
| 9:00 | 6727 | 7850 | 373 | 15 | 0,9579 | 3,765 |
| 9:15 | 6710 | 7863 | 366 | 15 | 0,9579 | 3,728 |
| 9:30 | 6693 | 7862 | 365 | 16 | 0,9579 | 3,728 |
| 9:45 | 6680 | 7855 | 366 | 16 | 0,9579 | 3,728 |
| 10:00 | 6689 | 7853 | 365 | 16 | 0,9585 | 3,728 |
| 10:15 | 6697 | 7856 | 366 | 16 | 0,9585 | 3,810 |
| 10:30 | 6706 | 7859 | 369 | 16 | 0,9585 | 3,810 |
| 10:45 | 6715 | 7870 | 370 | 16 | 0,9585 | 3,810 |
| 11:00 | 6651 | 7901 | 367 | 16 | 0,9585 | 3,810 |
| 11:15 | 6745 | 7888 | 357 | 16 | 0,9585 | 3,680 |
| 11:30 | 6737 | 7867 | 351 | 16 | 0,9585 | 3,680 |
| 11:45 | 6729 | 7850 | 348 | 16 | 0,9587 | 3,680 |
| 12:00 | 6721 | 7861 | 348 | 16 | 0,9587 | 3,680 |
| 12:15 | 6713 | 7862 | 348 | 16 | 0,9587 | 3,620 |
| 12:30 | 6704 | 7852 | 343 | 15 | 0,9587 | 3,620 |
| 12:45 | 6694 | 7862 | 340 | 15 | 0,9587 | 3,620 |
| 13:00 | 6685 | 7865 | 342 | 15 | 0,9587 | 3,620 |
| 13:15 | 6675 | 7864 | 341 | 15 | 0,9587 | 3,805 |
| 13:30 | 6665 | 7846 | 340 | 14 | 0,9587 | 3,805 |
| 13:45 | 6656 | 7850 | 340 | 14 | 0,9587 | 3,805 |
| 14:00 | 6646 | 7850 | 342 | 14 | 0,9595 | 3,805 |
| 14:15 | 6636 | 7853 | 338 | 14 | 0,9595 | 3,805 |
| 14:30 | 6645 | 7850 | 339 | 13 | 0,9595 | 3,690 |
| 14:45 | 6660 | 7862 | 339 | 13 | 0,9595 | 3,690 |
| 15:00 | 6675 | 7851 | 342 | 13 | 0,9595 | 3,690 |
| 15:15 | 6689 | 7849 | 342 | 13 | 0,9595 | 3,620 |
| 15:30 | 6704 | 7847 | 335 | 13 | 0,9595 | 3,620 |
| 15:45 | 6719 | 7858 | 329 | 13 | 0,9595 | 3,620 |
| 16:00 | 6734 | 7853 | 329 | 14 | 0,9595 | 3,620 |
| 16:15 | 6749 | 7858 | 326 | 14 | 0,9595 | 3,620 |
| 16:30 | 6745 | 7835 | 324 | 14 | 0,9595 | 3,150 |
| 16:45 | 6737 | 7849 | 322 | 14 | 0,9595 | 3,150 |
| 17:00 | 6729 | 7849 | 322 | 15 | 0,9595 | 3,150 |
| 17:15 | 6721 | 7856 | 313 | 15 | 0,9595 | 3,150 |
| 17:30 | 6712 | 7848 | 309 | 15 | 0,9595 | 2,841 |
| 17:45 | 6692 | 7866 | 306 | 15 | 0,9595 | 2,841 |
| 18:00 | 6671 | 7863 | 294 | 15 | 0,9595 | 2,841 |
| 18:15 | 6649 | 7869 | 290 | 15 | 0,9595 | 2,841 |
| 18:30 | 6627 | 7814 | 288 | 15 | 0,9595 | 2,841 |
| 18:45 | 6539 | 7674 | 282 | 15 | 0,9595 | 2,841 |
| 19:00 | 6777 | 8158 | 287 | 16 | 0,9595 | 2,841 |
| 19:15 | 6696 | 7944 | 287 | 16 | 0,9595 | 2,841 |
| 19:30 | 6657 | 7888 | 277 | 16 | 0,9595 | 2,520 |

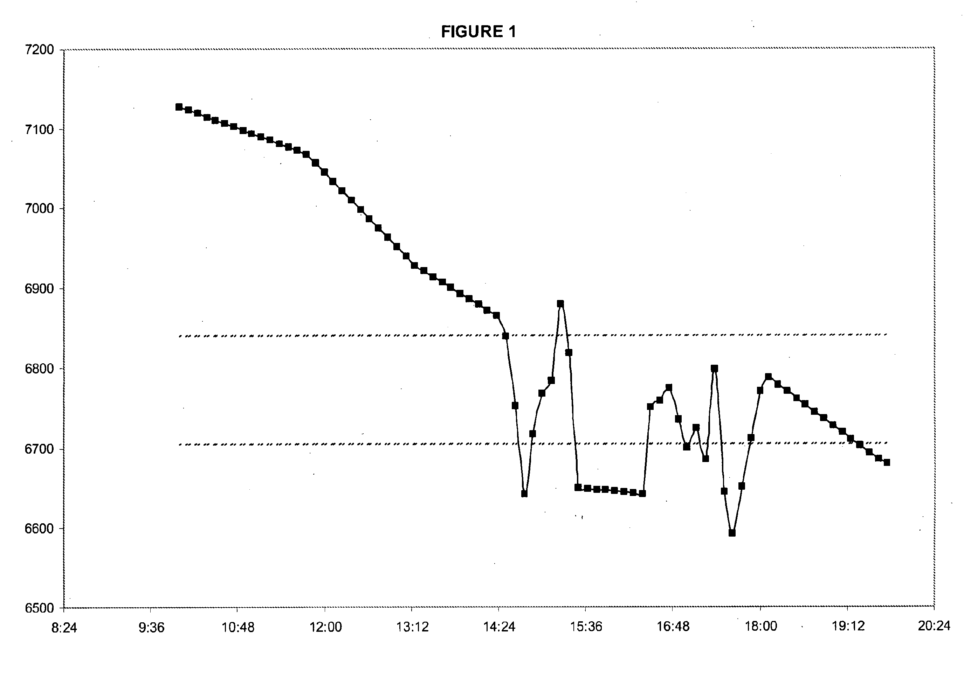

Figure 1 shows the monomer feed in reactor R1. The average monomer feed in R1 during the transition was calculated as 6772 kg/h. The dashed grey lines at 6705 kg/h and 6840 kg/h show the average monomer feed at -1% and +1% respectively. This shows that the feed into the first reactor was not within these limits and hence was not constant. The transition took 19 hours and 30 minutes to proceed to completion. A total amount of 457 tons of product off-specification was produced.

### Example according to the invention

The transition started at time 0h00, which is the time that the hydrogen feed was first increased with the intention of producing the second polymer Grade B. At this point Grade A was still being produced on-specification. The desired Grade B was obtained from time 14h15 onwards. The feeds and product properties are indicated in Table 3 below.

**Table 3: Transition according to the invention**

| **Time/** | **Monomer feed in 1^{st} reactor/** | **Monomer feed in 2^{nd} reactor/** | **Hydrogen feed in 1^{st} reactor/** | **Hydrogen feed in 2^{nd} reactor/** | **Product density/** | **Product melt flow index/** |
|---|---|---|---|---|---|---|
| **h:min** | **kg/h** | **kg/h** | **kg/h** | **kg/h** | **g/cm³** | **g/10min** |
| 0:00 | 15780 | 16540 | 194 | 25 | 0.9483 | 0.575 |
| 0:15 | 15658 | 16680 | 247 | 25 | 0.9486 | 0.553 |
| 0:30 | 15792 | 16790 | 277 | 25 | 0.9486 | 0.553 |
| 0:45 | 15849 | 16827 | 301 | 25 | 0.9486 | 0.553 |
| 1:00 | 15759 | 16887 | 310 | 25 | 0.9486 | 0.553 |
| 1:15 | 15782 | 16893 | 326 | 25 | 0.9495 | 0.674 |
| 1:30 | 15745 | 16989 | 388 | 25 | 0.9495 | 0.674 |
| 1:45 | 15829 | 17021 | 424 | 25 | 0.9495 | 0.674 |
| 2:00 | 15768 | 17246 | 451 | 24 | 0.9495 | 0.674 |
| 2:15 | 15768 | 17287 | 465 | 24 | 0.9481 | 0.555 |
| 2:30 | 15619 | 17317 | 476 | 24 | 0.9481 | 0.555 |
| 2:45 | 15709 | 17354 | 495 | 24 | 0.9481 | 0.555 |
| 3:00 | 15766 | 17334 | 495 | 24 | 0.9481 | 0.555 |
| 3:15 | 15741 | 17348 | 495 | 23 | 0.9503 | 0.864 |
| 3:30 | 15724 | 17327 | 495 | 23 | 0.9503 | 0.864 |
| 3:45 | 15760 | 17332 | 495 | 23 | 0.9503 | 0.864 |
| 4:00 | 15751 | 17341 | 495 | 23 | 0.9503 | 0.864 |
| 4:15 | 15735 | 17332 | 495 | 23 | 0.9536 | 1.402 |
| 4:30 | 15733 | 17313 | 495 | 23 | 0.9536 | 1.402 |
| 4:45 | 15852 | 17339 | 495 | 22 | 0.9536 | 1.402 |
| 5:00 | 15783 | 17353 | 495 | 22 | 0.9536 | 1.402 |
| 5:15 | 15852 | 17311 | 495 | 22 | 0.9541 | 1.895 |
| 5:30 | 15765 | 17337 | 495 | 22 | 0.9541 | 1.895 |
| 5:45 | 15673 | 17322 | 495 | 22 | 0.9541 | 1.895 |
| 6:00 | 15616 | 17330 | 495 | 22 | 0.9541 | 1.895 |
| 6:15 | 15773 | 17345 | 495 | 22 | 0.9541 | 1.796 |
| 6:30 | 15770 | 17331 | 495 | 23 | 0.9541 | 1.796 |
| 6:45 | 15646 | 17299 | 495 | 23 | 0.9541 | 1.796 |
| 7:00 | 15829 | 17334 | 495 | 24 | 0.9541 | 1.796 |
| 7:15 | 15740 | 17332 | 495 | 25 | 0.9558 | 2.137 |
| 7:30 | 15703 | 17299 | 495 | 26 | 0.9558 | 2.137 |
| 7:45 | 15818 | 17347 | 495 | 26 | 0.9558 | 2.137 |
| 8:00 | 15677 | 17340 | 495 | 27 | 0.9558 | 2.137 |
| 8:15 | 15788 | 17318 | 495 | 27 | 0.9562 | 1.809 |
| 8:30 | 15787 | 17329 | 495 | 27 | 0.9562 | 1.809 |
| 8:45 | 15817 | 17327 | 495 | 27 | 0.9562 | 1.809 |
| 9:00 | 15767 | 17328 | 495 | 28 | 0.9562 | 1.809 |
| 9:15 | 15667 | 17328 | 495 | 28 | 0.9566 | 2.128 |
| 9:30 | 15754 | 17325 | 495 | 28 | 0.9566 | 2.128 |
| 9:45 | 15720 | 17330 | 495 | 29 | 0.9566 | 2.128 |
| 10:00 | 15765 | 17328 | 495 | 28 | 0.9566 | 2.128 |
| 10:15 | 15780 | 17354 | 495 | 28 | 0.9559 | 2.160 |
| 10:30 | 15751 | 17329 | 495 | 28 | 0.9559 | 2.160 |
| 10:45 | 15795 | 17334 | 495 | 28 | 0.9559 | 2.160 |
| 11:00 | 15687 | 17313 | 495 | 28 | 0.9559 | 2.160 |
| 11:15 | 15802 | 17344 | 495 | 28 | 0.9570 | 2.175 |
| 11:30 | 15759 | 17329 | 495 | 28 | 0.9570 | 2.175 |
| 11:45 | 15768 | 17322 | 495 | 28 | 0.9570 | 2.175 |
| 12:00 | 15730 | 17339 | 495 | 28 | 0.9570 | 2.175 |
| 12:15 | 15759 | 17334 | 495 | 28 | 0.9570 | 2.165 |
| 12:30 | 15797 | 17351 | 495 | 28 | 0.9570 | 2.165 |
| 12:45 | 15737 | 17338 | 495 | 28 | 0.9573 | 2.165 |
| 13:00 | 15803 | 17333 | 495 | 28 | 0.9573 | 2.165 |
| 13:15 | 15856 | 17317 | 495 | 28 | 0.9573 | 2.158 |
| 13:30 | 15812 | 17328 | 495 | 28 | 0.9573 | 2.158 |
| 13:45 | 15791 | 17322 | 495 | 28 | 0.9573 | 2.158 |
| 14:00 | 15820 | 17313 | 495 | 28 | 0.9573 | 2.158 |
| 14:15 | 15810 | 17349 | 495 | 28 | 0.9579 | 2.219 |

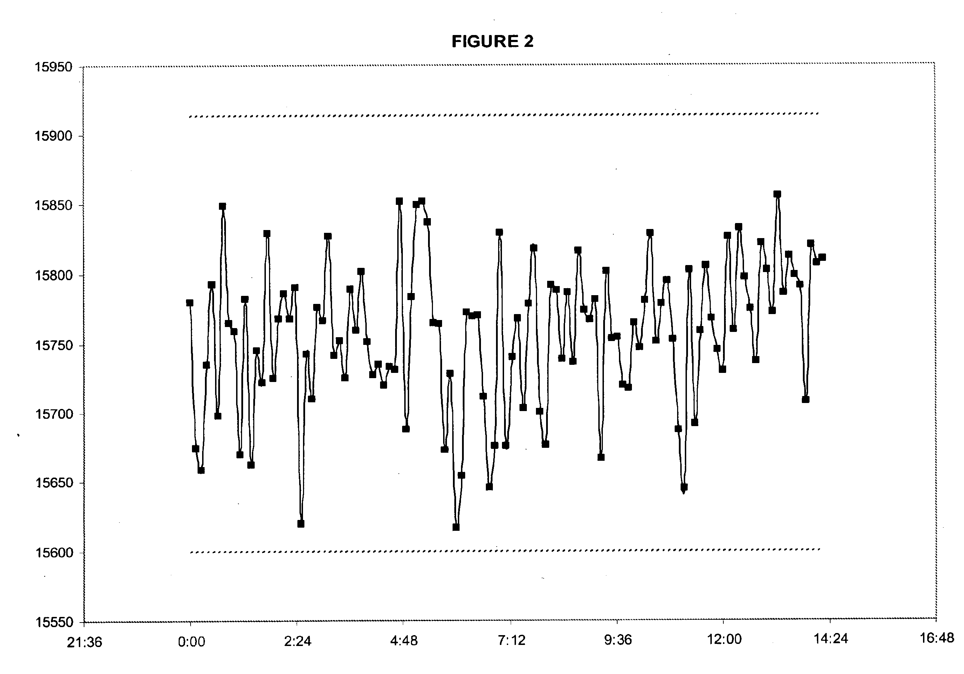

Figure 2 shows the monomer feed in reactor R1. The average monomer feed in R1 during the transition was calculated as 15757 kg/h. The dashed grey lines at 15599 kg/h and 15914 kg/h show the average monomer feed at -1% and +1% respectively. This shows that the feed into the first reactor was constant, the feed not changing by more than 1% during the transition with respect to the overall average feed during the transition.

The transition was 14 hours and 15 minutes long. A total amount of 122 tons of product off-specification was produced. The invented method hence reduced the transition time from 19 hours and 30 minutes to 14 hours and 15 minutes and reduced the production of off-specification from 457 tons to 122 tons, despite the fact that the feed of the monomer was over twice that of the prior art example.

## Claims

1. A method of transition between polyolefin grades in a polymerisation process comprising polymerising at least one monomer in at least a first reactor and a second reactor connected to each other in series, **characterised in that** the monomer feed into the first reactor is maintained essentially constant during the transition changing by at most 5 % during the transition, the percentage change being in relation to the average monomer feed in the first reactor of the transition.

2. Method according to claim 1, **characterised in that** the polyolefin grades are multimodal polyolefin grades.

3. Method according to claim 1 or 2, **characterised in that** the polyolefin grades are polyethylene grades.

4. Method according to any one of the previous claims, **characterised in that** the polymerisation reactors are loop reactors.

5. Method according to any one of the previous claims, **characterised in that** the feed of monomer into the first reactor is changed by at most 2 %.

6. Method according to claim 5, **characterised in that** the feed of monomer into the first reactor is changed by at most 1 %.

7. Method according to any one of the claims 1 to 6, **characterised in that** the polymerisation process is carried out using a Ziegler-Natta catalyst.

## Patentansprüche

1. Verfahren zum Übergang zwischen Polyolefintypen in einem Polymerisationsverfahren, welches das Polymerisieren von zumindest einem Monomer in zumindest einem ersten Reaktor und einem zweiten Reaktor, die in Reihe miteinander geschaltet sind, umfasst, **dadurch gekennzeichnet, dass** die Monomerzufuhr in den ersten Reaktor während des Übergangs im Wesentlichen konstant gehalten wird, wobei während des Übergangs eine maximale Veränderung von 5 % erfolgt, wobei die prozentuelle Veränderung in Relation zur durchschnittlichen Monomerzufuhr in den ersten Reaktor des Übergangs steht.

2. Verfahren nach Anspruch 1, **dadurch gekennzeichnet, dass** die Polyolefintypen multimodale Polyolefintypen sind.

3. Verfahren nach Anspruch 1 oder 2, **dadurch gekennzeichnet, dass** die Polyolefintypen Polyethylentypen sind.

4. Verfahren nach einem der vorherigen Ansprüche, **dadurch gekennzeichnet, dass** die Polymerisationsreaktoren Schlaufenreaktoren sind.

5. Verfahren nach einem der vorherigen Ansprüche, **dadurch gekennzeichnet, dass** die Monomerzufuhr in den ersten Reaktor um maximal 2 % verändert wird.

6. Verfahren nach Anspruch 5, **dadurch gekennzeichnet, dass** die Monomerzufuhr in den ersten Reaktor um maximal 1 % verändert wird.

7. Verfahren nach einem der Ansprüche 1 bis 6, **dadurch gekennzeichnet, dass** das Polymerisationsverfahren unter Verwendung eines Ziegler-Natta-Katalysators durchgeführt wird.

## Revendications

1. Procédé de transition entre des qualités de poly(oléfines) dans un processus de polymérisation comprenant la polymérisation d'au moins un monomère dans au moins un premier réacteur et un second réacteur raccordés l'un à l'autre en série, **caractérisé en ce que** la charge de monomère dans le premier réacteur est maintenue essentiellement constante pendant la transition, changeant de 5 % au plus pendant la transition, le pourcentage de changement étant en rapport à la charge de monomère moyenne dans le premier réacteur de la transition.

2. Procédé selon la revendication 1, **caractérisé en ce que** les qualités de poly(oléfines) sont des qualités de poly(oléfines) multimodales.

3. Procédé selon la revendication 1 ou 2, **caractérisé en ce que** les qualités de poly(oléfines) sont des qualités de poly(éthylène).

4. Procédé selon l'une quelconque des revendications précédentes, **caractérisé en ce que** les réacteurs de polymérisation sont des réacteurs à boucle.

5. Procédé selon l'une quelconque des revendications précédentes, **caractérisé en ce que** la charge de monomère dans le premier réacteur est changée de 2 % au plus.

6. Procédé selon la revendication 5, **caractérisé en ce que** la charge de monomère dans le premier réacteur est changée de 1 % au plus.

7. Procédé selon l'une quelconque des revendications 1 à 6, **caractérisé en ce que** le processus de polymérisation est réalisé en utilisant un catalyseur Ziegler-Natta.
